Europäisches Patentamt

European Patent Office

Office européen des brevets

(11) Veröffentlichungsnummer: **0 378 043**
**A1**

## (12) EUROPÄISCHE PATENTANMELDUNG

(21) Anmeldenummer: **89810011.0**

(22) Anmeldetag: **09.01.89**

(51) Int. Cl.5: **H02J 7/10**

(43) Veröffentlichungstag der Anmeldung:
**18.07.90 Patentblatt 90/29**

(84) Benannte Vertragsstaaten:
**AT BE CH DE ES FR GB GR IT LI LU NL SE**

(71) Anmelder: **Glur, Hanspeter**
**Aeschistrasse 25**
**CH-3110 Münsingen(CH)**

(72) Erfinder: **Glur, Hanspeter**
**Aeschistrasse 25**
**CH-3110 Münsingen(CH)**

(74) Vertreter: **Seehof, Michel et al**
**c/o AMMANN PATENTANWAELTE AG BERN**
**Schwarztorstrasse 31**
**CH-3001 Bern(CH)**

(54) Verfahren und Gerät zum Laden eines Akkumulators.

(57) Während des Ladevorgangs des Akkumulators wird in bestimmten Abständen die Akkumulatorspannung ($U_L$ oder $U_E$) erfasst und gespeichert. Sobald bei voller Akkumulatorladung die erfasste Spannung abzusinken beginnt, wird der Ladevorgang unterbrochen. Es ist damit möglich, ohne Berücksichtigung der Temperatur des Akkumulators eine korrekte Schnelladung desselben ohne Gefahr einer Ueberladung oder unvollständigen Ladung zu erzielen.

EP 0 378 043 A1

## Verfahren und Gerät zum Laden eines Akkumulators

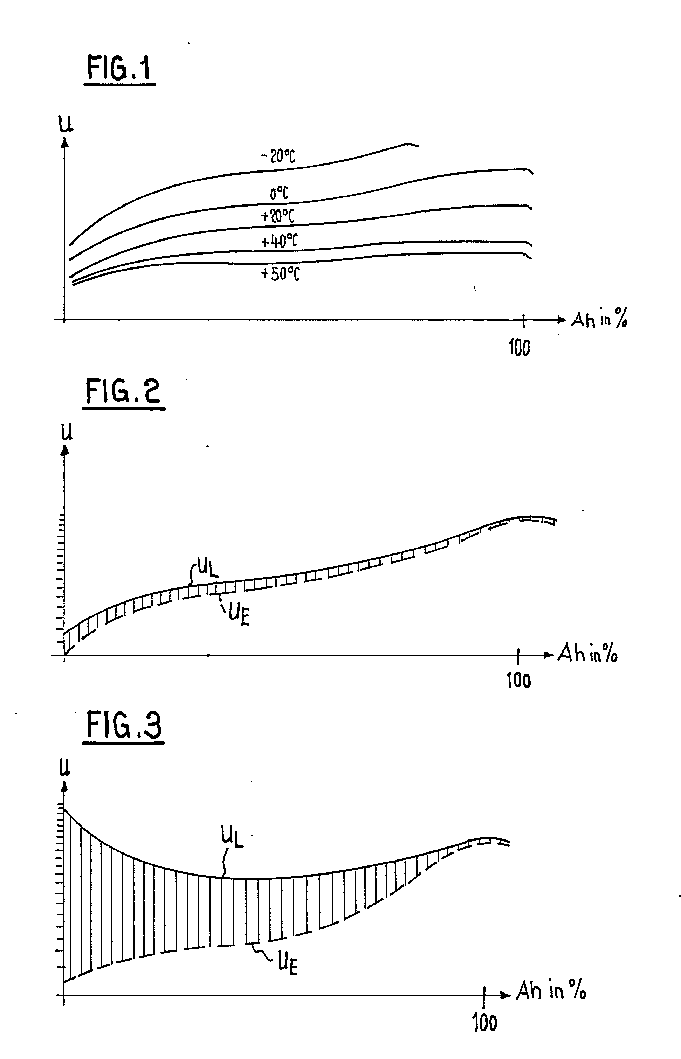

Die vorliegende Erfindung betrifft ein Verfahren zum Laden eines Akkumulators gemäss dem Oberbegriff des Anspruchs 1. Ein derartiges Verfahren ist bekannt aus der EP-A-0 198 990. Bei diesem bekannten Verfahren wird die Temperatur des Akkumulators so genau als möglich erfasst, und es wird in Funktion der gemessenen Temperatur eine Vergleichsspannung erzeugt, und das Aufladen des Akkumulators wird beendet, wenn die Referenzspannung bei der impulsweisen Entladung des Akkumulators nicht mehr unterschritten wird. Der Grund für diese Massnahme liegt darin, dass die Akkumulatorspannung für eine bestimmte Ladung desselben stark von der Temperatur abhängt. Diese Abhängigkeit ist in Figur 1 dargestellt, welche eine Schar von Ladekurven für verschiedene Temperaturen zeigt. Da somit die Spannung U des Akkumulators für einen bestimmten Ladezustand stark von der Temperatur abhängt, wird ein schnelles Laden des Akkumulators ohne Gefahr eines Ueberladens oder eines unvollständigen Ladens nur für möglich gehalten, wenn die Temperatur des Akkumulators, die während eines schnellen Ladevorgangs ansteigt, berücksichtigt wird. Eine Berücksichtigung der Temperatur ist jedoch nur möglich, wenn entweder in den Akkumulator ein Thermofühler eingebaut ist oder wenn ein geeigneter Thermofühler in genügend engem Kontakt mit dem zu ladenden Akkumulator gebracht wird. Das bringt aber gewisse Probleme mit sich besonders, wenn Akkumulatoren verschiedenartiger äusserer Gestalt und Grösse zu laden sind. Es wird dann schwierig, sowohl die Anschlüsse zum Laden des Akkumulators als auch den Thermofühler zur Erfassung der Temperatur korrekt anzubringen.

Ziel vorliegender Erfindung ist es daher, ein korrektes und schnelles Aufladen eines Akkumulators ohne Berücksichtigung der Akkumulatortemperatur zu ermöglichen. Je eine Lösung ist im kennzeichnenden Teil des Anspruchs 1 und 6 angegeben. Es zeigt sich, dass die Entladespannung des Akkumulators während des impulsweisen Entladevorgangs jeweils einen Wert aufweist, der während des Ladevorgangs bis zur vollen Ladung dauernd ansteigt. Beim Ueberschreiten der vollen Ladung sinkt jedoch diese Spannung ab. Dieses Phänomen wird dadurch erklärt, dass nach erfolgter Aufladung des Akkumulators die zugeführte Energie voll in Wärme umgesetzt wird und den Akkumulator rasch aufheizt, so dass nun seine Spannung infolge der in Figur 1 veranschaulichten Temperaturabhängigkeit der Akkumulatorspannung absinkt. Vergleicht man somit erfindungsgemäss die periodisch erfasste Entladespannung jeweils mit der beim vorhergehenden Messvorgang ermittelten Entladespannung, lässt sich ermitteln, wann die Differenz zwischen diesen Spannungen negativ wird, und in diesem Moment ist die volle Ladung erreicht und der Ladevorgang wird unterbrochen.

Es kann anschliessend an die Schnelladung mit einem verhältnismässig hohen Strom ein Nachladen mit erheblich reduziertem Strom erfolgen, weil sich jetzt der bei der Schnelladung erwärmte Akkumulator abkühlt und folglich eine gewisse zusätzliche Ladung aufnehmen kann.

Die Erfindung betrifft auch ein Ladegerät, insbesondere zur Durchführung des oben beschriebenen Verfahrens, gemäss Anspruch 7. Demgemäss erfolgt die Steuerung des Gerätes vorzugsweise durch einen Prozessor, was eine sehr flexible Steuerung der Ladevorgänge und eine vielseitige Einstell- und Anzeigemöglichkeit mit sich bringt.

Die Erfindung wird nun anhand eines Ausführungsbeispiels des erfindungsgemässen Ladegerätes näher erläutert.

Figur 1 zeigt den Zusammenhang zwischen der Akkumulator spannung und dessen Ladezustand in Abhängigkeit von der Temperatur,

Figur 2 ist ein Diagramm zur Veranschaulichung des erfindungsgemässen Ladevorgangs eines normalen Akkumulators,

Figur 3 zeigt ein Diagramm zur Veranschaulichung des Ladevorgangs eines vollständig entladenen Akkumulators ohne Anfangskapazität und

Figur 4 zeigt ein Schaltschema der wesentlichen Teile des erfindungsgemässen Ladegerätes.

Anhand der Figur 1 ist oben bereits der wesentliche Zusammenhang zwischen der Spannung eines Akkumulators, insbesondere Ni-Cd- oder Ni-Fe-Akkumulators, und dessen Ladezustand dargestellt. Man sieht, dass für niedrige Temperaturen die Akkumulatorspannung wesentlich höher liegt als für hohe Temperaturen. Die Akkumulatorspannung steigt jedoch unabhängig von der Temperatur mit zunehmender Ladung stetig an bis zu einem Maximum, über welchem sie dann relativ schnell absinkt.

Figur 2 zeigt eine entsprechende Ladekurve für einen Akkumulator, wobei $U_L$ die jeweilige Ladespannung während des Schnelladevorgangs und $U_E$ den entsprechenden Verlauf der Entladespannung, d.h. der Spannung während der impulsweisen starken Entladung des Akkumulators angibt. Man sieht aus Figur 2, dass bei einem guten Akkumulator die Differenz zwischen $U_L$ und $U_E$ verhältnismässig gering ist. Figur 3 zeigt die entsprechenden Kurven für einen stark entladenen Akkumulator ohne Anfangskapazität. Anfänglich, d.h. bei geringer Ladung, ist die Differenz zwischen der Ladespannung $U_L$ und der Entladespannung $U_E$ erheblich, während sie bei voller Ladung ähnlich ist wie gemäss Figur 2 bei einem guten Akkumulator. Man kann also annehmen, dass bei voller Ladung die Verhältnisse nicht davon abhängen, ob der Akkumulator ursprünglich vollständig entladen oder ungeladen war oder ob er in einem normalen Entladezustand war. Man kann also in beiden Fällen auf den Kurvenverlauf am Ende der Ladung, nämlich einen Abfall sowohl der Ladespannung $U_L$ als auch der Entladespannung $U_E$ abstellen. In beiden Fällen zeigt das beginnende Absinken der Spannung an, dass der Akkumulator voll aufgeladen ist und dass eine weitere Stromzufuhr sich nur in einer zusätzlichen Erwärmung auswirken würde.

Wie in den Figuren 2 und 3 angedeutet, erfolgt die Aufladung des Akkumulators intermitierend, d.h. es wird jeweils während einer bestimmten Dauer von beispielsweise 20 - 70 Sekunden mit einem bestimmten Strom von beispielsweise 0,1 bis 2,5 A pro Ah Akkumulatorkapazität aufgeladen, und nach Ablauf dieser Ladephase wird eine kurze Entladephase eingeleitet während welcher der Akkumulator während etwa 10 bis 2000 Millisekunden mit einem Strom von 0,1 bis 2,5 A pro Ah Akkumulatorkapazität entladen wird. Die kurzen Entladephasen sind in den Figuren 2 und 3 durch vertikale Linien angedeutet, die zugleich den Spannungsunterschied zwischen der Ladespannung und der Entladespannung veranschaulichen. Die jeweilige kurze Entladung mit einem relativ hohen Strom hat nicht nur den Vorteil, den sogenannten Memoryeffekt, d.h. eine Verstopfung der feinen Oeffnungen der Sinterelektrode und damit einen Kapazitätsverlust zu vermeiden, sondern die Entladespannung wird vorzugsweise als Referenzspannung benutzt, d.h. das periodische Erfassen von Referenzwerten wird synchronisiert mit dem jeweiligen Entladevorgang. Wie noch erläutert wird, ist es von Vorteil, die jeweils erfasste Referenzspannung in einen digitalen Wert umzusetzen, der dann im Mikroprozessor vorteilhaft verarbeitet werden kann. Insbesondere kann dort ein Vergleich nacheinander ermittelter und abgespeicherter Referenz-Spannungswerte erfolgen und dabei entschieden werden, ob die jeweils ermittelte Referenzspannung höher oder niedriger liegt als die vorher gemessene. Es ist dann auch möglich, eine nach oben immer feinere Abstufung vorzunehmen, wie in den Figuren 2 und 3 angedeutet ist. Man kann damit im kritischen Bereich, d.h. bei der vollen Akkumulatorspannung, geringere Differenzen zwischen erfassten Akkumulatorspannungen feststellen. Auch ein geringfügiges Absinken der Akkumulatorspannung am Ende des Ladevorgangs kann daher schon erfasst werden, und dementsprechend kann der Ladevorgang unterbrochen werden bevor eine Ueberladung stattfindet.

Wie schon erwähnt, kann anschliessend an eine Schnelladung ein Nachladen mit einem geringeren Strom von beispielsweise 0,01 bis 0,9 A pro Ah- Akkumulatorkapazität erfolgen und zwar sogleich oder mit einer gewissen Verzögerung. Dieses Nachladen erfolgt im gleichen Rhythmus, d.h. mit Ladeperioden von beispielsweise 20 - 70 Sekunden und Entladeperioden von 10 ms bis 2 Sekunden. Hierbei kühlt sich der Akkumulator ab und es kann somit eine Volladung entsprechend dem abgekühlten Akkumulator erzielt werden. Auch dieses Nachladen kann im gleichen Sinne beendet werden wie oben beschrieben, d.h. wenn die Ladespannung $U_L$ oder vorzugsweise die Entladespannung $U_E$ des Akkumulators nicht mehr ansteigt bzw. absinkt, wird der Nachladevorgang beendet. Es kann anschliessend noch ein Strom von 1/30 bis 1/20 A pro Ah Akkumulatorkapazität zugeführt werden, um die Akkumulatorladung (Selbstentladung) zu erhalten.

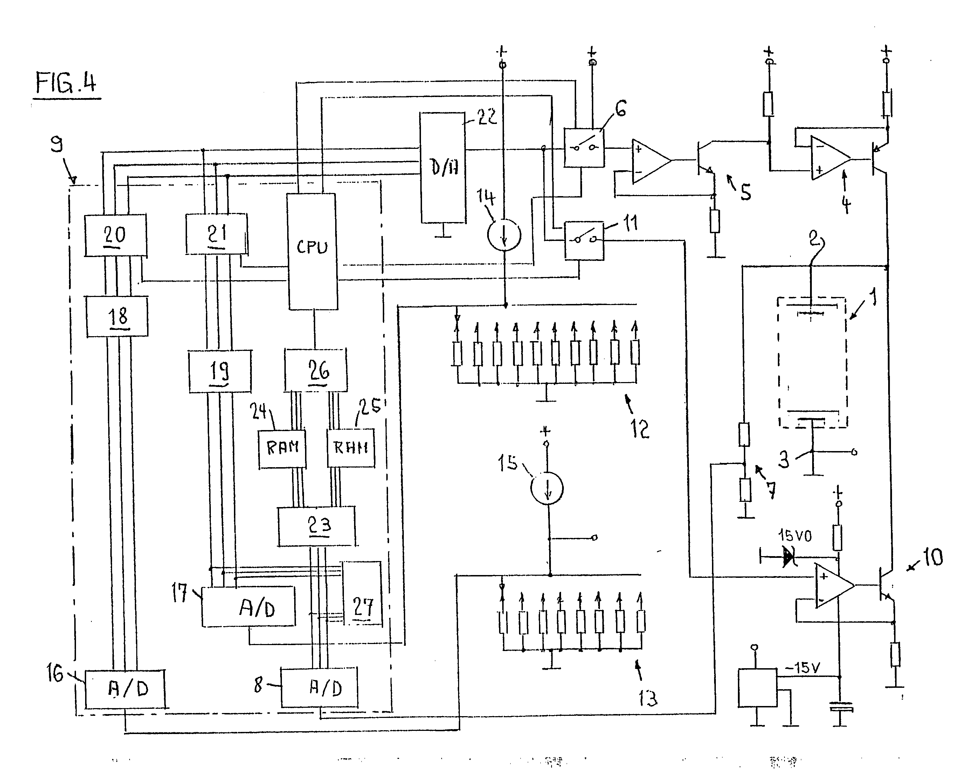

Figur 4 zeigt die wesentlichen Schaltungsteile des erfindungsgemässen Ladegerätes, wobei verschiedene Verbindungen insbesondere innerhalb des Prozessors aus Platzgründen und zur Erhaltung der Uebersichtlichkeit weggelassen sind. Der aufzuladende Akkumulator 1 ist zwischen Ladeklemmen 2 und 3 angeschlossen. Ueber einen Endverstärker 4 wird ihm ein Ladestrom zugeführt. Dem Endverstärker 4 ist ein Vorverstärker 5 vorgeschaltet, der über einen Schalter 6 angesteuert werden kann. Die Akkumulatorspannung an der Klemme 2 wird über einen Spannungsteiler 7 einem Analog-Digitalwandler 8 des Prozessors 9 zugeführt. Ueber einen Endverstärker 10 kann der Akkumulator 1 entladen werden. Der Endverstärker 10 wird angesteuert durch einen Schalter 11. Die Schalter 6 und 11 werden durch den Prozessor 9 gesteuert. Die Schaltung weist zwei Wählschalter 12 und 13 auf. Mit jedem dieser Schalter kann je einer von mehreren abgestuften Widerständen in den Stromkreis einer Stromquelle 14 bzw. 15 geschaltet werden. Der jeweils auftretende Spannungsabfall am eingeschalteten Widerstand wird einem Analog-Digitalwandler 16 bzw. 17 zugeführt, welcher den eingestellten Spannungsabfall in eine digitale Information überführt. Diese digitalen Informationen werden je einem Umsetzer 18 bzw. 19 zugeführt, welcher den angelegten Spannungswert in eine Steuerspannung umwandelt. Diese in digitaler Form vorliegende Steuerspannung wird über Schaltkreise 20 bzw. 21 wahlweise einem Digital-Analogwandler 22 zugeführt, welcher wahlweise über einen der Schalter 6 oder 11 den Verstärker 4 oder 10 steuert. Der Analog-Digitalwandler 8 ist über einen Schaltkreis 23 wahlweise mit zwei veränderbaren Speichern 24 und 25 verbunden, in welche der digitale Ausgangswert des Analog-Digitalwandlers 8 wahlweise eingespeichert werden kann. Die Ausgänge der Speicher 24 und 25 sind mit einer Vergleichsschaltung 26 verbunden, welche die Differenz zwischen den Ausgangswerten der Speicher 24 und 25 ermittelt und welche ein Ausgangssignal erzeugt, wenn die Differenz zwischen zwei aufeinanderfolgenden eingespeicherten Werten negativ wird.

Bedienung und Arbeitsweise des dargestellten Gerätes sind wie folgt:

Der zu ladende Akkumulator 1 wird eingesetzt und mit den Anschlussklemmen 2 und 3 verbunden. Mittels des Wählschalters 12 wird entsprechend der Zellenzahl bzw. Gesamtnennspannung des Akkumulators die zugeordnete Einstellung gewählt. Dadurch kann beispielsweise ein Kurzschluss oder Unterbruch einer einzelnen Zelle erkannt werden. Mit dem Wählschalter 13 wird der Kapazität des Akkumulators entsprechend eine Einstellung vorgenommen, und über den Analog-Digitalwandler 17 und den Umsetzer 19 wird damit der Verstärker 4,5 mit einer solchen Analogspannung angesteuert, dass der Akkumulator mit dem richtigen Strom aufgeladen wird und über den Analog-Digitalwandler 16 und den Umsetzer 18 sowie den Digital-Analogwandler 22 und den Schalter 11 wird dem Verstärker 10 eine analoge Steuerspannung zugeführt, welche diesen Verstärker so steuert, dass dem Akkumulator jeweils ein Entladestrom entzogen wird, welcher in einem bestimmten Verhältnis zur Akkumulatorkapazität steht. Durch den Mikroprozessor 9 werden nun die Schalter 6 und 11 so gesteuert, dass gemäss Obenstehendem jeweils während beispielsweise 70 Sekunden der Akkumulator über den Verstärker 4 aufgeladen wird, worauf er während 10 ms bis 2 Sekunden über den Verstärker 10 entladen wird. Die Steuerung erfolgt so, dass während dieser kurzen Entladephase von 10 ms bis 2 Sekunden die Entladespannung am Akkumulator über den Digital-Analogwandler 8 erfasst und abwechslungsweise in einen der Speicher 24 und 25 eingespeichert wird. Wie oben erläutert, steigen die so eingespeicherten Spannungswerte während der normalen Aufladung des Akkumulators ständig an. Ist der Akkumulator voll aufgeladen, beginnen jedoch diese Spannungswerte abzusinken, und sobald ein erstes Absinken durch die Vergleichsschaltung 26 festgestellt wird, erfolgt eine Ausschaltung des Schnell-Ladevorgangs. Wie oben erwähnt, kann dann allerdings ein Nachladevorgang eingeleitet werden, während welchem mit einem reduzierten Strom geladen wird, während impulsweise der volle Entladestrom entzogen wird. Dieses Nachladen beginnt mit einer bestimmten Verzögerung, die durch den Prozessor festgelegt wird, um den Akkumulator abkalten zu lassen. Dieser Vorgang wird nach einer bestimmten Zeit unterbrochen. Der Mikroprozessor kann hierauf während unbestimmter Zeit noch die Zufuhr eines Erhaltungsladestromes zum Akkumulator steuern, bis derselbe aus dem Gerät entnommen wird, wobei auch zyklisch geladen und entladen wird.

Das Gerät kann ferner Mittel aufweisen um defekte Akkumulatoren, die beispielsweise einen Zellenschluss aufweisen zu ermitteln. Wie oben erwähnt, wird die Gesamtnennspannung des Akkumulators bzw. die Zellenzahl desselben mittels des Wählschalter 12 eingestellt. Wird nun auch bei voller Aufladung des Akkumulators, d.h. bei beginnendem Absinken der ermittelten Entladespannungen, die eingestellte Nennspannung des Akkumulators nicht erreicht, ist dies ein Zeichen dafür, dass der Akkumulator defekt ist. Diese Tatsache kann mittels einer bestimmten Leuchtanzeige angezeigt werden. Zu diesem Zweck kann eine weitere Vergleichsschaltung 27 vorgesehen sein, welche die digitalisierte Referenzspannung mit der digitalisierten gemessenen Spannung $U_L$ oder $U_E$ vergleicht. Es können übrigens weitere Leuchtanzeigen vorhanden sein, welche bestimmte Betriebszustände des Gerätes anzeigen, beispielsweise normalen Ladevorgang, Nachladevorgang, Zufuhr eines Erhaltungsladestromes oder Bereitschaft des Ladegerätes, oder bereits eingeladene Kapazität in %.

Es sind verschiedene Varianten möglich, es könnten beispielsweise die Analogwerte der Entladespannung laufend gespeichert werden und es könnte ermittelt werden, wann der gespeicherte Wert abzusinken beginnt, um den Ladevorgang jeweils auszuschalten. Der Verstärker 4 arbeitet bei kleiner Akkumulatorspannung verhältnismässig unwirtschaftlich, indem im Leistungstransistor ein erheblicher Spannungsabfall erzeugt werden muss. Es ist daher möglich, eine umschaltbare Spannungsquelle für verschiedene Ladespannungen vorzusehen. Es ist auch möglich, den Verstärker 4 mit Impulsen relativ hoher Frequenz und variabler Breite anzusteuern und den pulsierenden Strom zu glätten. Es ist zwar vorteilhaft, als Referenzspannung die Akkumulatorspannung $U_E$ während des Entladeimpulses zu erfassen, aber wie die Kurven der Figuren 2 und 3 zeigen, verläuft die Ladespannung oder Leerlaufspannung des Akkumulators bei voller Ladung praktisch parallel zur Entladespannung, und man könnte daher die Spannung am Akkumulator in irgend einem Zeitpunkt eines Lade-Entladezyklus erfassen und mit dem vorher erfassten Wert vergleichen, um die Ausschaltung bei abgeschlossenem Ladevorgang auszulösen. Man müsste dann allerdings die Vergleichsmessungen erst nach einer gewissen Verzögerung zu erfassen beginnen, weil gemäss Fig. 3 die Lade- oder Leerlaufspannung eines völlig entladenen Akkumulators vorerst noch absinkt.

Anstatt die Referenzwerte für die Zellenzahl bzw. Nennspannung und die Kapazität des zu ladenden Akkumulators in Analogwerten einzugeben und in digitale Form zu wandeln, könnten diese Referenzwerte mittels Tasten oder entsprechenden Wählschaltern direkt in digitaler Form eingegeben und gespeichert werden.

Der Prozessor erlaubt insbesondere Anzeigen über den Ladezustand des Akkumulators, wobei die jeweils erfasste Entladespannung $U_E$ mit in Speichern vorhandenen Referenzspannungen verglichen wird.

Ein Teilziel der Erfindung ist es, den Akkumulator korrekt und schonend aufzuladen ohne seine Temperatur zu erfassen. Falls man hierbei auf ein schnelles Laden nicht angewiesen ist, besteht die Möglichkeit, auch ohne Erfassung der Akkumulatorspannung auszukommen. Das ist möglich, wenn während beliebig langer Zeit mit einem Ladestrom von höchstens IC 1/10, d.h. mit höchstens 1/10 A pro 1 Ah Kapazität, geladen und ebenfalls periodisch ein Entladestrom-Impuls entzogen wird. Dabei kann vorzugsweise etwa je während 20 s geladen und während 50 ms entladen werden. Hierbei können Akkumulatoren beliebig lange angeschlossen bleiben, ohne dass sie Schaden nehmen. Es wurde festgestellt, dass mit diesem Ladeverfahren ein Akkumulator nach 2000 Lade-Entladezyklen immer noch eine Kapazität von 90 % aufwies, während für bekannte Ladeverfahren eine Lebensdauer von 300 Zyklen angegeben wird.

**Ansprüche**

1. Verfahren zum Laden eines Akkumulators, insbesondere Ni-Ca- oder Ni-Fe-Akkumulators, wobei intermittierend geladen und kurzzeitig entladen und die Spannung des Akkumulators mit einer Referenzspannung verglichen wird und in Abhängigkeit vom Vergleichsergebnis der Ladevorgang beendet wird, dadurch gekennzeichnet, dass als Referenzspannung jeweils der gespeicherte Spannungswert eines vorangehenden Zyklus dient, und dass der Ladevorgang unterbrochen wird, wenn die Referenzspannung sinkt.

2. Verfahren, insbesondere nach Anspruch 1, dadurch gekennzeichnet, dass aus einem Absinken der Akkumulatorspannung unter dessen Nennspannung auf einen Defekt des Akkumulators geschlossen und der Ladevorgang unterbrochen wird.

3. Verfahren nach Anspruch 1 oder 2, dadurch gekennzeichnet, dass die Schnelladung erfolgt, bis die Referenzspannung absinkt, worauf eine Nachladung mit reduziertem Strom erfolgt.

4. Verfahren nach Anspruch 3, dadurch gekennzeichnet, dass die Schnelladung mit einem Strom in A vom 0,1 bis 2,5 - fachen und die Nachladung mit einem Strom in A vom 0,01 bis 0,9 - fachen der Kapazität in Ah des Akkumulators erfolgt.

5. Verfahren nach Anspruch 3 oder 4, dadurch gekennzeichnet, dass die Nachladung während 0,5 bis 1,5 Stunden erfolgt.

6. Verfahren, insbesondere nach Anspruch 1, dadurch gekennzeichnet, dass der Akkkumulator beliebig lange mit einem Strom von höchstens IC 1/10 geladen und periodisch kurzzeitig entladen wird, wobei vorzugsweise je während 20 s geladen und während 50 ms entladen wird.

7. Ladegerät, insbesondere zur Durchführung des Verfahrens nach Anspruch 1, gekennzeichnet durch einen Prozessor (9) zur Steuerung des Ladevorgangs, mit einem veränderbaren Speicher (24,25) zum fortlaufenden Abspeichern von Referenzspannungswerten ($U_L$, $U_E$) und mit einer Vergleichsschaltung (26) zum Vergleichen von Referenzspannungswerten, durch Mittel (20,21) zur Steuerung intermittierender Lade- und Entladevorgänge und durch die Vergleichsschaltung gesteuerten Mittel (CPU) zum Abschalten des Ladevorgangs.

8. Gerät nach Anspruch 7, gekennzeichnet durch einen A/D-Wandler (8) zur Umsetzung der Akkumulatorspannung in einen digitalen Spannungswert.

9. Gerät nach Anspruch 7 oder 8, gekennzeichnet durch einen Zeitgeber (CPU) zur Steuerung der Lade- und Entladezyklen und durch eine Vergleichsschaltung (26) zum Vergleich der Akkumulatorspannung mit einer vorgegebenen Nennspannung.

10. Gerät nach einem der Ansprüche 7 bis 9, gekennzeichnet durch Wählschalter (12,13) zur Eingabe der Zellenzahl und Kapazität des Akkumulators (1) und durch Mittel (18,22,4,5) zur Steuerung des Ladestromes.

11. Gerät nach einem der Ansprüche 7 bis 10, gekennzeichnet durch Anzeigen für den Betriebszustand und den Akkumulatorzustand.

## FIG.1

U

−20℃
0℃
+20℃
+40℃
+50℃

Ah in %

100

## FIG.2

U

$U_L$
$U_E$

Ah in %

100

## FIG.3

U

$U_L$
$U_E$

Ah in %

100

FIG.4

EP 0 378 043 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0181112 (CHRISTIE ELECTRIC CORP.) * Seite 7, Zeile 15 - Zeile 23 * | 1, 2 | H02J7/10 |
| A | * Seite 17, Zeile 11 - Zeile 24; Ansprüche 1, 3, 6; Figuren 1, 6, 7 * | 7, 8, 9, 11 | |
| A | EP-A-0147241 (ALEXANDER MANUFACTURING COMPANY) * Zusammenfassung; Ansprüche 1-18; Figuren 1, 2 * | 1, 3, 4, 7, 8 | |
| A | EP-A-0034003 (REDIFON TELECOMMUNICATIONS LIMITED) * Seite 15, Zeile 6 - Zeile 22; Anspruch 1; Figuren 1, 5-9 * | 1, 6 | |
| A | DE-A-3040852 (LICENTIA PATENT-VERWALTUNGS-GMBH) * Anspruch 1; Figuren 1-3 * | 1 | |
| A | DE-A-2948251 (H. NEUHIERL) * Ansprüche 1-4 * | 1, 10, 11 | |
| A | DE-A-2940011 (INSTITUT FUR RUNDFUNKTEKNIK GMBH) | | **RECHERCHIERTE SACHGEBIETE (Int. Cl.5)** H02J |

Der vorliegende Recherchenbericht wurde für alle Patentansprüche erstellt

| Recherchenort | Abschlußdatum der Recherche | Prüfer |
|---|---|---|
| DEN HAAG | 04 JULI 1989 | GOETZ P.A. |